# EUROPEAN PATENT APPLICATION

(11) **EP 0 522 738 A1**
(43) Date of publication of application: **13.01.1993**
(21) Application number: 92305742.6
(22) Date of filing: 23.06.1992
(51) Int. Cl.: C08L 83/07, C08K 9/06

(54) **Organosiloxane compositions and use thereof**

(30) Priority: 05.07.1991 GB 9114526
(71) Applicant: DOW CORNING S.A., B-7180 Seneffe (BE)
(72) Inventor: Antheunis, Nicole, B-3140 Keerbergen (BE); Wolf, Andreas Thomas Franz, Midland, Michigan 48640 (US)
(74) Representative: Bullows, Michael

(57) **Abstract**

Curable composition comprising (A) a polydiorganosiloxane having at least two ethylenically unsaturated groups per molecule, (B) an organohydrogensiloxane, (C) a catalyst for the addition of SiH groups to silicon-bonded unsaturated groups and (D) a particulate filler, the composition having in the cured elastomeric state a storage modulus of at least 0.5 x 10⁹ Pa. and tan delta of at least 0.15 at a temperature of -120°C.

The compositions are particularly adapted for use as interlayers in the production of laminated impact and fire resistant safety glass.

## Description

This invention relates to novel siloxane compositions and to the use of such compositions in the fabrication of laminated and other articles.

Laminated structures such as windows and windshields comprising sheets of glass and/or plastic having therebetween an interlayer of organic or organosilicon material are known. For example G.B. Patent Specification 783 867 discloses organopolysiloxane compositions which are convertible to transparent elastomers and whch are useful as interlayers in the preparation of safety glass. French Patent No. 2 213 162 discloses sound insulating windows comprising two spaced sheets of glass in which the space is filled with a silicone elastomer.

U.S. Patent No. 3,616,839 discloses glass-silicone resin-stretched acrylic resin laminates in which the silicone resin is preferably of the room temperature curing type. One type of such silicone resin disclosed in the reference uses as a cure mechanism the addition of an SiH linkage of one organopolysiloxane molecule across the double bond of an olefinically-unsaturated radical attached to another organopolysiloxane molecule. The stated advantage of such a structure is that it permits the combination of an external abrasion resistant glass surface with a plastic sheet which can function as a load bearing member. Similar compositions are disclosed in other references. For example, G.B. 2 080 378A discloses the use of inter alia such platinum-catalysed compositions as a thermal barrier in the channels of windows. The compositions may contain a filler which is non-reinforcing for silicone rubbers. E.P. 0 388 092 discloses compositions having cohesive bonding to a variety of organic polymer substrates and comprising a polydiorganosiloxane gum having silicon-bonded unsaturated groups, an organohydrogenpolysiloxane, a platinum catalyst and a second polydiorganosiloxane gum containing a specified concentration of silanol groups. The compositions may contain reinforcing silica fillers which have been treated with low molecular weight organosilicon compounds. However, there is no disclosure therein of the viscoelastic properties required in the compositions of the present invention. E.P. 0 124 235 discloses platinum-catalysed gel-forming compositions obtained by mixing a polydiorganosiloxane having at least two vinyl groups per molecule, a polydiorganosiloxane having at least two silicon-bonded hydrogen atoms per molecule, a platinum catalyst, fine silica powder and a polyorganosiloxane having at least 0.5% of hydroxyl groups. The presence of the latter component is stated to produce the desired thixotropy in the compositions.

Laminated glass structures having fire resistant properties have been developed wherein the interlayer is formed from an organic resin. Also, there is disclosed in French Patent No. 2 394 394 a fire resistant window comprising at least two sheets of glass having therebetween a sheet of silicone elastomer, characterised in that the sheet of glass facing the fire is not fire resistant and the other sheet of glass is fire resistant.

Several properties are required in an interlayer for use in the fabrication of fire resistant laminated glass structures. They must, for most applications, be substantially transparent when cured, exhibit low shrinkage and be able to pass prescribed fire endurance tests. In the case of laminated safety glass structures they should also have good resistance to impact by moving bodies. A further, preferred, property is that the interlayer composition should be flowable and thus capable of convenient introduction into the space between the glass sheets. Prior art interlayer compositions have not been able to fulfil these requirements. For example, organic resin interlayers melt at high temperatures thus allowing the laminate to shear. They also have poor adhesion to broken glass pieces thereby allowing the pieces to fall away and permit access of the fire to the outer pane. In addition, the organic layer can be flammble. Silicone based interlayers generally have better fire resistance and less tendency to high temperature softening than the organic resins. However, they are generally available as pre-cured sheets and do not lend themselves to application by cast-in-place techniques, that is by pouring into the cavity between the glass panes. In addition, they lack the strength of the organic resins and thus render the laminated structure less resistant to shattering under impact from heavy articles or bodies.

Surprisingly, we have now found that comparatively soft or weak materials may be used as an interlayer in fire and impact resistant structures provided the storage modulus and the ratio of the loss modulus to elastic modulus of the composition have appropriate values.

According to the present invention there is provided a curable composition comprising (A) at least one polydiorganosiloxane wherein the silicon-bonded organic substituents are monovalent hydrocarbon groups having from 1 to 14 carbon atoms, at least 70 percent of said organic substituents being methyl and there being present at least two silicon-bonded ethylencially-unsaturated groups per molecule, (B) at least one organohydrogensiloxane having at least two silicon-bonded hydrogen atoms per molecule, (C) a catalyst for the additon of SiH groups to silicon-bonded ethylenically unsaturated groups and (D) a particulate filler which is at least partialy insoluble in the composition, said composition having in the cured elastomeric state a storage modulus E' of at least 0.5 x 10⁹ Pa at a temperature of -120°C and a tan delta of at least 0.15 at a temperature of -120°C, E' and tan delta being as hereinafter defined and as measured at 16 herz.

The invention also includes a laminated structure comprising at least two panels of glass or other rigid sheet material having in the space therebetween an interlayer comprising the cured product of a composition of this invention.

In the polydiorganosiloxanes (A) at least 70 percent of the silicon-bonded organic substituents are methyl groups and at least two silicon-bonded substituents per molecule are ethylenically-unsaturated groups having from 2 to 14 carbon atoms, for example vinyl, allyl, hexenyl or dodecenyl. Any remaining silicon-bonded substituents in the polydiorganosiloxane are monovalent hydrocarbon groups having from 2 to 14 carbon atoms and free of ethylenic unsaturation for example ethyl, propyl, hexyl, tetradecyl, phenyl, phenylethyl and styryl. The preferred polydiorganosiloxanes are those wherein the ethylenically-unsaturated substituents are selected from vinyl and hexenyl and substantially all of the remaining substituents are methyl. Examples of the preferred polydiorganosiloxanes (A) therefore include copolymers of dimethylsiloxane units and methylvinylsiloxane units, copolymers of dimethylsiloxane units and dimethylvinylsiloxane units, copolymers of dimethylsiloxane, methylvinylsiloxane and phenylmethylvinylsiloxane units, copolymers of dimethylsiloxane and methylhexenylsiloxane units and copolymers of dimethylsiloxane and dimethylhexenylsiloxane units. Preferably the average number of ethylenically-unsaturated groups present per molecule lies within the range from 2 to 6.

In general the molecular size of the polydiorganosiloxanes is not critical and they may vary from freely flowing liquids to gummy solids. However, the preferred method of employing the compositions is as cast- and cured-in-place interlayers. The preferred polydiorganosiloxanes (A) are therefore those having a viscosity in the range from about 100 to about 10,000 cS (10⁻⁴ to 10⁻² m²/s) at 25°C thus facilitating the formulation of a composition having the desired pourable consistency. If desired, mixtures of polydiorganosiloxanes of differing molecular size may be employed to achieve the desired viscosity characteristics or values for E' and tan delta.

As component (B) of the compositions of this invention there are employed organohydrogensiloxanes having at least two silicon-bonded hydrogen atoms per molecule. The organic substituents present on the remaining silicon atoms may be any monovalent hydrocarbon group having from 1 to 6 carbon atoms and free of aliphatic unsaturation, for example methyl, ethyl or phenyl. The organohydrogensiloxanes (B) may be homopolymers or copolymers or combinations of two or more of these having different molecular size and/or silicon-bonded hydrogen content. Thus, they may comprise units of the formula 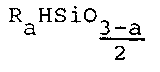
wherein R is for example methyl, ethyl or phenyl and a is 1 or 2 either alone or combined with copolymeric siloxane units, for example dimethylsiloxane units or methylphenylsiloxane units. Having regard to the desired pourability of the curable composition they are preferably of relatively low viscosity but they may have viscosities as high as 20,000 cS (2 x 10⁻² m²/s) at 25°C. Preferred as organohydrogensiloxanes (B) are the methylhydrogenpolysiloxanes, for example (CH₃HSiO)ₙ, (n is an integer) copolymers of methylhydrogensiloxane (CH₃HSiO) units and trimethylsiloxane units, copolymers of dimethylsiloxane, methylhydrogensiloxane and trimethylsiloxane units, copolymers of dimethylsiloxane and dimethylhydrogensiloxane units and combinations of two or more of such siloxane homopolymers and copolymers. Mixtures of organohydrogensiloxanes having differing molecular weights and/or differing proportions of SiH content may be employed.

Any catalyst which is effective in promoting the addition of ≡SiH groups to silicon-bonded ethylenically unsaturated groups may be employed as component (C) of the compositions of this invention. A variety of such catalysts are known and described in the art, including metallic platinum, platinum deposited on or chemically bound to supports such as carbon, silica and alumina, ruthenium, rhodium and palladium, salts of the platinum metals including platinic chloride and chloroplatinic acid and complexes obtained by reacting platinum compounds with unsaturated organic and organosilicon compounds such as cyclohexene and vinyl-containing siloxane oligomers. The preferred catalysts, in view of their activity, availability or compatibility with the other ingredients of the composition are the platinum compounds and complexes thereof with siloxanes having silicon-bonded unsaturated e.g. vinyl substituents. The catalyst (C) may be employed in proportions sufficient to provide the desired rate of cure. In general, proportions conventional in the art and providing from about 5 to about 30 parts by weight of platinum metal per million parts of the combined weight of components (A) and (B) will provide the desired result.

The filler (D) may be any filler having fire resistant properties and which provides in the cured composition the minimum values of E' and tan delta specified herein. The storage modulus E' is a measure of the ability of a substance to store energy and is defined as the ratio of elastic stress to strain. In practice it can be measured by means of apparatus suitable for the measurement of the viscoelastic properties of solid materials, for example the Rheometrics Solid Analyser RSA II. Tan delta is defined as the ratio of the loss modulus of the cured composition to its storage modulus and is the tangent of the phase angle shift between the stress and the strain. The loss modulus is the ratio of the viscous stress to strain and is a measure of the ability of a substance to dissipate energy. Tan delta is obtainable from measurements carried out on the cured composition employing the Rheometrics Solid Analyser referred to hereinabove. More detailed information concerning the nature and measurements of the storage modulus and tan delta is set out in the book Viscoelastic Properties of Polymers by J.D. Ferry (1980 Edition). Preferably E' has a value of at least 1 x 10⁹ Pa and tan delta is at least 0.2 when each are determined as aforesaid at 16 herz and -120°C.

Suitable fillers (D) include fumed and precipitated silicas which have been treated with siloxanes. Particularly suitable fillers are particulate, flowable materials comprising reinforcing silicas having absorbed thereon a high proportion of a polydiorganosiloxane wherein at least 80 percent of the total organic substituents are methyl, any remaining organic substituents being selected from phenyl and vinyl groups. The absorbed polydiorganosiloxane should comprise at least 15%, and more preferably at least 30%, by weight of the weight of the coated filler. Such particulate filler materials may have up to 65 percent or more of absorbed polydiorganosiloxane provided that they remain in the essentially non-liquid state. The preferred reinforcing silicas are those having a high surface area to weight ratio, for example from about 50 to about 300 square metres per gram. The molecular size of the absorbed polydiorganosiloxane is not critical but polydiorganosiloxanes having viscosities within the range from 10⁻³ m²/s to 20 x 10⁻³ m²/s at 25°C are preferred having regard to availability and to ease of treatment of the silica substrate.

Also particularly suitable and preferred as filler (D) are silicone elastomers in finely-divided particulate form. Such particulate elastomers may be prepared by spraying or emulsion techniques for example as described in U.S. Patents 4,742,142, 4,743,670 and 4,749,765. Fillers of particular utility in the compositions of this invention are available commercially from Toray Silicone Limited under the trade name Trefil.

The particle size of the filler Component (D) is not critical provided the filler is in a flowable form which enables it to be incorporated homogeneously into the curable composition. In general the preferred fillers are those having an average particle size within the range from about 10 microns up to 300 microns. As little as 0.05 percent by weight of the filler (D) may be employed but it is preferred that it should comprise at least one percent and more preferably from 2 to 15 percent of the total weight of the components (A) to (D). However, the proportion employed will be determined to some extent by the desired viscosity and pourability of the curable composition and degree of transparency required for the interlayer. Where the composition is employed to form a cast- and cured- in situ interlayer it is preferred that the viscosity is less than about 5 x 10⁻³ m²/s at 25°C.

The particularly suitable fillers (D) referred to above are especially advantageous inasmuch as they result in cured compositions which are substantially transparent as well as providing the desired impact resistance.

In addition to the essential Components (A) to (D) the compositions of this invention may contain certain optional ingredients, for example secondary fillers, additives for reducing the viscosity of the composition, additives which confer flame retardant properties on the cured interlayer, for example compounds of transition metals such as titanium butoxide, zirconium silicate and zirconium octoate, adhesion promoting substances and additives for inhibiting cure of the composition. Preferred secondary fillers for use in the compositions of this invention are resinous copolymers of R₃SiO_{0.5} units and SiO₂ units wherein R is selected from methyl groups and vinyl groups. Preferably at least 70 percent of R groups are methyl and at least one R per molecule is vinyl.

The compositions of this invention can be employed to form interlayers for a variety of laminated structures using two or more panels of the same or different materials such as glass to glass, glass to resin (e.g. acrylic) or resin to resin. They are, however, particularly adapted for application as interlayer materials for use in fire and impact resistant safety glass structures comprising two or more sheets of glass. The compositions may be preformed and cured into interlayer sheets and thereafter laminated with the outer glass panes. A more preferred method of forming the laminated structures, however, comprises introducing the liquid curable compositions into the space defined beween the glass panes and thereafter allowing the composition to cure at normal ambient or slightly elevated temperatures (up to 50°C). If desired the bonding of the curable composition to the glass or other member of the laminated structure may be enhanced by pretreatment of the surface of the member with a primer or other adhesion promoting substance.

The following Examples in which the parts are expressed by weight, and viscosities at 25°C, illustrate the invention.

### Example 1

A composition (Part A) was prepared by mixing the following ingredients:

| | |
|---|---|
| Dimethylvinylsiloxy-end stopped polydimethylsiloxane (4.5 x 10⁻⁴ m²/s) | 86.4 parts |
| Trimethylsiloxy-end stopped polymethylhydrogensiloxane (3 x 10⁻⁵ m²/s) | 6.2 parts |
| Copolymer of dimethylsiloxane and methylhydrogensiloxane (5 x 10⁻⁶ m²/s) | 6.2 parts |
| Methylvinylcyclotetrasiloxane | 1.2 parts |

A second Composition (Part B) was prepared by mixing together.

| | |
|---|---|
| Dimethylvinylsiloxy-end stopped polydimethylsiloxane (2 x 10⁻³ m²/s) | 99.85 parts |
| Complex of chloroplatinic acid and divinyltetramethyldisiloxane | 0.15 part |
| and a third composition (Part C) by mixing together Silicone elastomer in form of powder having average particle size about 3 µm | 25 parts |
| Dimethylvinylsiloxy-end stopped polydimethylsiloxane (2 x 10⁻³ m²/s) | 74.89 parts |
| Complex of chloroplatinic acid as in Part B | 0.11 part |

Parts A, B and C were then mixed together in a weight ratio of 9.5 : 100 : 7 respectively to provide a curable composition. A portion of this composition was poured into a 2mm space between two parallel sheets of safety glass (31cm x 21cm) until full and allowed to cure at ambient room temperature (about 20°C) for 3 weeks. The laminate was then tested for impact resistance according to British Standard 6206, Class C and was found to have a value of 135 Joules. Another laminate similarly prepared had a fire resistance when measured according to BS 476, Pt 22, (1987) of at least 30 minutes.

By way of comparison values were obtained for selected physical properties of the composition of this Example and a comparative composition prepared by mixing the ingredients described in the Examples of E.P. 0 388 092 wherein Al was present in an amount of 56 parts and the silica in an amount of 32 parts. The results were as follows:

| Property | Composition of This Example | Comparative Composition |
|---|---|---|
| Tensile strength at room temperature (MPa) | 0.3 | 8.5 |
| Elongation at break (%) | 80 | 750 |
| Tear resistance (KN/M) | <1 | 20 |
| Tan delta (16 hertz & -120°C) | 0.2 | 0.1 |
| E' (Pa) | 1.5 x 10⁹ | 2 x 10⁹ |

The composition of this Example is demonstrably a weaker, less elastomeric composition than the comparative composition. Laminates prepared by use of the comparative composition demonstrated an impact resistance meeting Class C of BS 6206 but TGA measurements indicated that the cured composition had unsatisfactory heat resistance.

### Example 2

The procedure of Example 1 was repeated except that Part C was obtained by mixing together 49.925 parts of a dimethylvinylsiloxy-end stopped polydimethylsiloxane (2 x 10⁻³ m²/s), 0.075 part of the complex of chloroplatinic acid and 50 parts of a precipitated silica powder having a particle size distribution of from 10 to 300 µm and having absorbed thereon 60 percent by weight (based on finished powder) of a polydimethylsiloxane having a viscosity of approximately 12.5 x 10⁻³ m²/s. The curable composition was obtained by mixing Parts A, B and C in a weight ratio of 9.5 : 100 : 7 respectively.

The glass laminate containing the cured composition as interlayer had an impact resistance (British Standard 6206, Class B) of 202 Joules. The cured composition had the following physical properties:
- tensile strength =: 0.4 MPa
- tear strength =: 0.7 KN/m
- elongation =: 92%
- tan delta =: 0.2 ) 16 herz &
- E' =: 0.9 x 10⁹) -120°C

### Example 3

A composition (Part A) was prepared by mixing together

| | |
|---|---|
| Dimethylvinylsiloxy-end stopped polydimethylsiloxane (4.5 x 10⁻⁴ m²/s) | 96.9 parts |
| Trimethylsiloxy-end stopped polymethylhydrogensiloxane (3 x 10⁻⁵ m²/s) | 1.5 parts |
| Copolymer of dimethylsiloxane and methylhydrogensiloxane (5 x 10⁻⁶ m²/s) | 1.5 parts |
| Methylvinylcyclotetrasiloxane | 0.1 part |

A second composition (Part B) was prepared by mixing together the vinyl-containing polydimethylsiloxane employed in Part A (99.47 parts) and the platinum complex described in Example 1 (0.53 part). A third composition (Part C) was obtained by mixing the polydimethylsiloxane and platinum complex employed in Part B (74.6 and 0.4 parts respectively) with 25 parts pf the silicone elastomer in powder form employed in Example 1.

Parts A, B and C were thoroughly mixed together in a weight ratio of 100 : 16 : 30 respectively to provide a curable composition having a viscosity of about 2 x 10⁻³ m²/s. This composition was used as a cast and cured in situ interlayer as described in Example 1. Following the 3 week cure period the laminate had an impact resistance of 135 Joules and passed the British Standard test 6206, Class C. The cured composition had the following physical properties:
- tensile strength =: 0.3 MPa
- elongation at break =: 45%
- tan delta =: 0.2 ) 16 herz &
- E' =: 1.5 x 10⁹) -120°C

### Example 4

A composition (Part A) was prepared by mixing the following ingredients:

| | |
|---|---|
| Dimethylvinyl end-stopped polydimethylsiloxane (2 x 10⁻³ m²/s) | 17.4 parts |
| Resin coplymer of Me₃SiO_{0.5}, Me₂ViSi_{0.5} and SiO₂ units (Me = methyl, Vi = vinyl) | 9.4 parts |
| Copolymer of dimethylsiloxane and methylhydrogensiloxane (5 x 10⁻⁶ m²/s) | 41.2 parts |
| Trimethylsiloxy-terminated polymethylhydrogensiloxane (3 x 10⁻⁵ m²/s | 29.2 parts |
| Methylvinylcyclotetrasiloxane | 2.7 parts |

A second composition (Part B) was prepared by mixing

| | |
|---|---|
| Copolymer of dimethylsiloxane and methylvinylsiloxane units (2 x 10⁻³ m²/s) | 63.0 parts |
| Resin coplymer of (as in Part A) | 34.0 parts |
| Particulate silicone elastomer (as in Example 1) | 2.7 parts |
| Pt complex (as in Example 1) | 0.24 part |
| Zr octoate | 38 ppm |

Part B (95.0 parts) and Part A (5.0 parts) were mixed together and the mixture allowed to cure at normal room temperature for 3 weeks. E' and tan delta were then measured on the composition at -120°C and 16 hertz and gave the following results:
- E' =: 0.6 x 10⁹
- tan delta =: 0.3

The composition was evaluated as an interlayer as described in Example 1 and the resulting laminate was found to pass Class C impact resistance. It had a fire resistance when measured according to BS 476 (31cm x 21cm panel) of 30 minutes.

### Example 5

To the curable composition of Example 1 was added about 38 ppm of zirconium octoate as a 6% by weight dispersion in a liquid polydimethylsiloxane. When the cured composition was ignited burning of the composition stopped after about 10 minutes.

## Claims

1. A curable composition comprising (A) at least one polydiorganosiloxane wherein the silicon-bonded organic substituents are monovalent hydrocarbon groups having from 1 to 14 carbon atoms, at least 70 percent of said organic substituents being methyl and there being present at least two silicon-bonded ethylenically-unsaturated groups per molecule, (B) at least one organohydrogensiloxane having at least two silicon-bonded hydrogen atoms per molecule, (C) a catalyst for the addition of SiH groups to silicon-bonded ethylenically unsaturated groups and (D) a particulate filler which is at least partially insoluble in the composition, said composition having in the cured elastomeric state a storage modulus E' of at least 0.5 x 10⁹ Pa at a temperature of -120°C and a tan delta of at least 0.15 at a temperature of -120°C, E' and tan delta being as hereinbefore defined and as measured at 16 herz.

2. A composition as claimed in Claim 1 wherein E' and tan delta have values of 1 x 10⁹ Pa and 0.2 respectively.

3. A curable composition as claimed in Claim 1 or Claim 2 wherein the filler (D) is selected from the group consisting of (i) particulate materials comprising a reinforcing silica having absorbed thereon at least 15 percent by weight, based on the weight of the silica, of a polydiorganosiloxane wherein at least 80 percent of the total silicon-bonded organic groups are methyl, any remaining silicon-bonded organic groups being selected from phenyl and vinyl groups, and (ii) silicone elastomers in particulate form.

4. A composition as claimed in Claim 3 wherein the reinforcing silica (i) has absorbed thereon at least 30 percent of the polydiorganosiloxane.

5. A composition as claimed in any one of the preceding claims wherein the polydiorganosiloxane (A) has a viscosity in the range from 10⁻⁴ to 10⁻² m²/s at 25°C.

6. A composition as claimed in any one of the preceding claims wherein the catalyst (C) is selected from platinum compounds and complexes thereof with siloxanes having silicon-bonded substituents having olefinic unsaturation.

7. A composition as claimed in any one of the preceding claims which has a viscosity of less than 5 x 10⁻³ m²/s at 25°C.

8. A composition as claimed in any one of the preceding claims wherein the filler (D) is present in an amount of from 2 to 15 parts by weight based on the combined weights of components (A) to (D).

9. A composition as claimed in any one of the preceding claims wherein the filler (D) has an average particle size within the range from 10 microns to 300 microns.

10. A composition as claimed in any one of the preceding claims which also includes an additive for imparting fire retardant properties to the cured composition.

11. A composition as claimed in any one of the preceding claims which also includes a resinous copolymer comprising R₃SiO_{0.5} units and SiO₂ units wherein R is selected from methyl groups and vinyl groups, at least one R group per molecule being vinyl.

12. A laminate structure comprising at least two panels of glass or other rigid sheet material having in the space between at least two of said panels the cured product of a composition as claimed in any one of the preceding claims.
